# EUROPEAN PATENT APPLICATION

(11) **EP 4 564 321 A1**
(43) Date of publication of application: **04.06.2025**
(21) Application number: 23896511.5
(22) Date of filing: 14.11.2023
(51) Int. Cl.: G07C 9/00

(54) **SWITCHING CONTROL METHOD FOR INTELLIGENT DOOR LOCK, AND INTELLIGENT DOOR LOCK**

(30) Priority: 30.11.2022 CN 202211530363
(71) Applicant: Huawei Technologies Co., Ltd., Shenzhen, Guangdong 518129 (CN)
(72) Inventor: HAN, Yaohui, Shenzhen, Guangdong 518129 (CN); SONG, Ping, Shenzhen, Guangdong 518129 (CN)
(74) Representative: Gill Jennings & Every LLP
(86) International application number: PCT/CN2023/131425
(87) International publication number: WO 2024/114359

(57) **Abstract**

This application provides a method for controlling opening and closing of a smart door lock, and the smart door lock. The method for controlling opening and closing is applied to the smart door lock. The smart door lock includes a first camera used for distance measurement and a second camera used for image capturing. The method for controlling opening and closing includes the following steps. S601: Turn on the second camera. S602: Obtain a first image captured by the second camera, and perform face detection on the first image. S603: When no face information is detected from the first image, turn off the second camera and turn on the first camera. S604: Determine a target distance, where the target distance is a fourth distance between the smart door lock and an object that is detected by using the first camera and that is in front of the smart door lock. S605: When the target distance is less than or equal to a specified first distance, output prompt information, where the prompt information is used to prompt to move in a direction away from the smart door lock. S606: Turn on the second camera and turn off the first camera. The method for controlling opening and closing of a smart door lock can improve control efficiency and control accuracy of the smart door lock without increasing additional costs.

## Description

### CROSS-REFERENCE TO RELATED APPLICATIONS

This application claims priority to Chinese Patent Application No. 202211530363.7, filed with the China National Intellectual Property Administration on November 30, 2022 and entitled "METHOD FOR CONTROLLING OPENING AND CLOSING OF SMART DOOR LOCK, AND SMART DOOR LOCK", which is incorporated herein by reference in its entirety.

### TECHNICAL FIELD

This application relates to the field of smart door lock technologies, and in particular, to a method for controlling opening and closing of a smart door lock, and the smart door lock.

### BACKGROUND

Currently, a control process of a smart door lock that supports unlocking via facial recognition includes: When a passive infrared (passive infrared, PIR) detector detects that a person approaches a door lock, a direct time of flight (direct time of flight, dTOF) camera is turned on, to measure a distance between the person and the door lock in real time. When the distance measured by the dTOF camera meets a facial recognition trigger condition (for example, the measured distance tends to decrease, and a last measured distance is less than a specified value such as 1.2 meters), the dTOF camera is turned off, and an indirect time of flight (indirect time of flight, iTOF) camera is turned on. A raw (raw) image of a face is shot by using the iTOF camera, and facial recognition is performed based on the raw image. Whether to open the lock is determined based on a facial recognition result. When preset face information is recognized based on the raw image, the door lock may be opened. When the preset face information is not recognized, the door lock may not be opened.

Currently, a shooting range of the iTOF camera on the smart door lock is limited, and the iTOF camera does not have a human body recognition function. When the person is excessively close to the iTOF camera, the iTOF camera may not capture a face, and the raw image shot by the iTOF camera does not include face information. Consequently, subsequent processing such as facial recognition and unlocking control cannot be performed. In addition, whether a person is in front of the smart door lock cannot be further determined, and a corresponding prompt cannot be provided, which affects control accuracy of the smart door lock.

To resolve the foregoing problems, a method that may be currently used is to configure a human body recognition algorithm in the smart door lock. The human body recognition algorithm is used to recognize whether a human body exists in the raw image shot by the iTOF camera. In addition, when the human body is recognized, but the face information cannot be captured, a voice is played to prompt a user to adjust a distance, so that the iTOF camera can capture the face information. In the method, configuring the human body recognition algorithm in the smart door lock increases algorithm complexity. As a result, computing pressure of a processing device in the smart door lock is increased, and a processing speed of a device in the door lock is affected. Therefore, control efficiency of the smart door lock is reduced, and additional costs are increased.

### SUMMARY

This application provides a method for controlling opening and closing of a smart door lock, and the smart door lock, to improve control efficiency and control accuracy of the smart door lock without increasing additional costs.

According to a first aspect, an embodiment of this application provides a method for controlling opening and closing of a smart door lock. The method is applied to the smart door lock. The smart door lock includes a first camera used for distance measurement and a second camera used for image capturing. The method includes: turning on the second camera; obtaining a first image captured by the second camera, and performing face detection on the first image; when no face information is detected from the first image, turning off the second camera and turning on the first camera; determining a target distance, where the target distance is a fourth distance between the smart door lock and an object that is detected by using the first camera and that is in front of the smart door lock; when the target distance is less than or equal to a specified first distance, outputting prompt information, where the prompt information is used to prompt to move in a direction away from the smart door lock; and turning on the second camera and turning off the first camera.

In the method, when detecting no face in the image shot by the camera for image capturing, the smart door lock may detect, by using the camera used for distance measurement, the distance between the smart door lock and the object in front of the smart door lock. If it is determined that the distance is less than or equal to the specified first distance, it indicates that currently, there is a high probability that a scenario in which a user in front of the smart door lock is excessively close to the smart door lock and the camera for image capturing cannot shoot a user face exists. In this case, the smart door lock outputs the prompt information that indicates to move in a direction away from the smart door lock, to prompt the user in front of the smart door lock to move backward, thereby improving a possibility that the user face is within a shooting range of the camera for image capturing. Therefore, after the smart door lock turns on the camera for image capturing, a success rate at which the camera shoots a user face image can be improved. Therefore, this can reduce or avoid a problem in which there is a user in front of the door, but the lock cannot be opened due to a facial recognition failure that occurs because the user is excessively close to the smart door lock, and the smart door lock cannot shoot the user face. Thus, control accuracy of the smart door lock is improved. The method can implement, based on existing functions of existing devices (the camera used for distance measurement and the camera used for image capturing) in the smart door lock, the foregoing effect without increasing additional costs. Therefore, control efficiency of the smart door lock can be improved.

In a possible design, the first camera may be a dTOF camera, and the second camera may be an iTOF camera.

In a possible design, after the turning on the second camera and turning off the first camera, the method further includes: obtaining a second image captured by the second camera; performing face detection on the second image; when face information is detected from the second image, determining a facial feature that corresponds to the detected face information; when it is determined that a similarity between the facial feature and a specified facial feature is greater than or equal to a specified similarity threshold, performing liveness detection based on the second image; and opening the smart door lock when liveness detection succeeds.

In the method, before turning on the second camera and turning off the first camera, the smart door lock has output the prompt information that is used to prompt to move in the direction away from the smart door lock. Therefore, after the second camera is turned on and the first camera is turned off, there is a high probability that the user is usually within a distance range in which a face can be shot by the second camera. There is also a high probability that the second image captured by the second camera includes the user face. Therefore, processing such as face detection and liveness detection is performed on the second image herein, and unlocking control is performed based on a processing result, so that control accuracy can be improved. Based on the method, in a scenario in which the user is excessively close to the smart door lock, the user may be prompted to move in the direction away from the smart door lock, and then a user image is captured to perform face detection and unlocking control, so that control accuracy and a success rate can be improved, and control efficiency of the smart door lock can be improved.

In a possible design, after the outputting prompt information, and before the turning on the second camera and turning off the first camera, the method further includes: waiting for specified duration; or detecting, by using the first camera, a fifth distance between the smart door lock and the object in front of the smart door lock until the detected fifth distance is greater than the first distance, or until the detected fifth distance is greater than the first distance and less than a specified second distance, where the second distance is greater than the first distance.

In the method, before the second camera is turned on and the first camera is turned off, waiting for the specified duration can reserve time for the object in front of the smart door lock to move in the direction away from the smart door lock, and ensures as much as possible that the object in front of the smart door lock has moved to a proper position when the second camera captures an image after the second camera is turned on. In this way, a success rate of capturing a face image by the second camera is improved, thereby improving the success rate and accuracy of unlocking control. Alternatively, before the second camera is turned on and the first camera is turned off, distance measurement is performed for another time and the measured distance between the smart door lock and the object in front of the smart door lock is determined to be within a distance range between the first distance and the second distance. This ensures that the second camera can be turned on after the object in front of the smart door lock has moved to a proper position, and then ensures that the second camera can capture a face image, thereby improving the success rate and accuracy of unlocking control.

In a possible design, after the waiting for specified duration, and before the turning on the second camera and turning off the first camera, the method further includes: detecting, by using the first camera, a sixth distance between the smart door lock and the object in front of the smart door lock; and determining that the detected sixth distance is greater than the first distance, or determining that the detected sixth distance is greater than the first distance and less than the specified second distance, where the second distance is greater than the first distance.

In the method, by waiting for the specified duration, the smart door lock can reserve time for the object in front of the smart door lock to move in the direction away from the smart door lock. Alternatively, to further improve the face image retrieved by the second camera, after waiting for the specified duration, the smart door lock may perform distance measurement for another time and determine that the measured distance between the smart door lock and the object in front of the smart door lock is greater than the first distance or is within the distance range between the first distance and the second distance. This ensures to a maximum extent that the second camera is turned on after the object in front of the smart door lock has moved to a proper position, thereby further ensuring that the second camera can capture the face image, and improving the success rate and accuracy of unlocking control to a maximum extent.

In a possible design, after the waiting for specified duration, and before the turning on the second camera and turning off the first camera, the method further includes: detecting, by using the first camera, a seventh distance between the smart door lock and the object in front of the smart door lock; if the detected seventh distance is less than or equal to the first distance, outputting the prompt information for another time; waiting for the specified duration; detecting, by using the first camera, an eighth distance between the smart door lock and the object in front of the smart door lock; and determining that the detected eighth distance is greater than the first distance, or determining that the detected eighth distance is greater than the first distance and less than the specified second distance, where the second distance is greater than the first distance.

In the method, after the smart door lock waits for the specified duration, if the measured distance still does not meet a requirement of a proper distance range (that is, greater than the first distance or within the range between the first distance and the second distance), it indicates that the object in front of the smart door lock is not adjusted to be within the proper distance range. In this case, the smart door lock may prompt, for another time, the object in front of the smart door lock to adjust a position, and after prompting, may capture an image for another time for face detection. In a manner of repeated prompting for a plurality of times, it can be ensured as much as possible that the object in front of the smart door lock can be located within the proper distance range for facial recognition, thereby improving a success rate of facial recognition.

In a possible design, the first image may include at least one frame of a raw image continuously shot by the second camera. In the method, face information recognition is performed based on the at least one frame of the continuous raw image, so that accuracy of a recognition result can be improved.

In a possible design, the target distance is an average value of N reference distances detected by the first camera for N consecutive times. N is a positive integer. Each of the N reference distances is a distance between the smart door lock and the object that is detected by the first camera in one detection process and that is in front of the smart door lock.

In the method, the average value of the distances detected for N consecutive times is used as a finally used distance value, so that accuracy of a measurement result can be improved, and an error caused by an accidental factor can be avoided or reduced.

In a possible design, after the determining a target distance, the method further includes: when the target distance is greater than or equal to a specified third distance, turning off the first camera, where the third distance is greater than the first distance and is a minimum distance at which the object leaves the smart door lock.

In the method, when the smart door lock determines that the detected target distance is greater than or equal to the specified third distance, it indicates that there is a high probability that the object in front of the smart door lock has left. In this case, the first camera may be turned off in advance, to terminate a current procedure, thereby reducing some unnecessary power consumption and improving processing efficiency.

According to a second aspect, this application provides a smart door lock. The smart door lock includes a first camera, a second camera, a memory, and one or more processors. The first camera is configured to perform distance measurement. The second camera is configured to perform image capturing. The memory is configured to store computer program code. The computer program code includes computer instructions. When the computer instructions are executed by the one or more processors, the smart door lock is enabled to perform the method described in the first aspect or any possible design of the first aspect.

According to a third aspect, this application provides an electronic device. The electronic device is configured to control a smart door lock. The smart door lock includes a first camera used for distance measurement and a second camera used for image capturing. The electronic device includes a memory and one or more processors. The memory is configured to store computer program code. The computer program code includes computer instructions. When the computer instructions are executed by the one or more processors, the electronic device controls the smart door lock to perform the method described in the first aspect or any possible design of the first aspect.

In a possible design, the electronic device may be deployed in the smart door lock.

According to a fourth aspect, this application provides a computer-readable storage medium. The computer-readable storage medium stores a computer program. When the computer program is run on a smart door lock/an electronic device, the smart door lock/the electronic device is enabled to perform the method described in the first aspect or any possible design of the first aspect.

According to a fifth aspect, this application provides a computer program product. The computer program product includes a computer program or instructions. When the computer program or the instructions are run on a smart door lock/electronic device, the smart door lock/electronic device is enabled to perform the method described in the first aspect or any possible design of the first aspect.

For beneficial effects of the second aspect to the fifth aspect, refer to descriptions of beneficial effects of the first aspect. Details are not described herein again.

### BRIEF DESCRIPTION OF DRAWINGS

FIG. 1 is a diagram of an iTOF camera position and a human body standing position in an application scenario of a smart door lock;
FIG. 2 is a diagram of a hardware architecture of a smart door lock according to an embodiment of this application;
FIG. 3 is a diagram of an architecture of a control system according to an embodiment of this application;
FIG. 4 is a diagram of a method for controlling opening and closing of a smart door lock according to an embodiment of this application;
FIG. 5A, FIG. 5B, and FIG. 5C is a schematic flowchart of a method for controlling opening and closing of a smart door lock according to an embodiment of this application;
FIG. 6 is a diagram of a method for controlling opening and closing of a smart door lock according to an embodiment of this application; and
FIG. 7 is a diagram of a structure of an electronic device according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The terms "first" and "second" below in the description of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

For ease of understanding, descriptions of concepts related to this application are provided as examples for reference.

Time of flight (time of flight, TOF) usually refers to (round-trip) time of flight of light/optical pulses between different objects. A distance between the different objects can be calculated based on the time of flight. Therefore, the time of flight is usually used in a distance measurement scenario. The TOF may be classified into a direct time of flight dTOF and an indirect time of flight iTOF.

A principle of dTOF-based distance measurement is to directly transmit an optical pulse to a target object, and then measure a time interval between a reflected optical pulse and the transmitted optical pulse, to obtain the time of flight of light. A principle of iTOF-based distance measurement is to indirectly measure the time of flight of light by measuring a phase offset between a transmitted optical signal and a reflected optical signal after an optical signal is transmitted to a target object.

A dTOF camera (or referred to as a dTOF camera) in embodiments of this application may be a device that performs distance measurement in the dTOF-based distance measurement manner. The dTOF camera may be configured to perform distance measurement.

An iTOF camera (or referred to as an iTOF camera) in embodiments of this application may be a three-dimensional camera or a depth camera that uses the iTOF-based distance measurement manner. The iTOF camera may be configured to capture an image. The image captured by the iTOF camera may include a three-dimensional feature and a two-dimensional feature of a face that is determined based on the iTOF-based distance measurement manner.

It should be understood that, in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following pieces (items)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

Reference to "an embodiment", "some embodiments", "a possible embodiment", or the like described in this specification indicates that one or more embodiments of this application include a specific feature, structure, or characteristic described with reference to the embodiment. Therefore, statements such as "in an embodiment", "in some embodiments", "in some other embodiments", and "in another embodiment/other embodiments" that appear at different places in this specification do not necessarily mean referring to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner. The term "connection" includes a direct connection and an indirect connection, unless otherwise stated.

In embodiments of this application, the word such as "example" or "for example" is used to represent an example, an illustration, or a description. Any embodiment or design scheme described as an "example" or "for example" in embodiments of this application should not be explained as being more preferred or having more advantages than another embodiment or design scheme. To be precise, the word such as "example" or "for example" is intended to present a related concept in a specific manner.

Currently, a PIR detector in a smart door lock wakes up the smart door lock when detecting that there is a person in a surrounding environment. The smart door lock may perform distance measurement by using a dTOF camera, and when detecting that a distance between the smart door lock and a human body meets a specific condition, determine that the human body approaches the smart door lock and turn on an iTOF camera. The iTOF camera (may also be referred to as a three-dimensional depth-sensing camera) may sense depth information of a face, and shoot a raw image. Facial recognition is performed based on the raw image, and unlocking control may be performed based on a recognition result. However, because a shooting range of the iTOF camera is limited, when the human body is excessively close to a door lock (or a door), the iTOF camera may not capture the face. As a result, the raw image shot by the iTOF camera does not include face information, which causes an error in a result of facial recognition performed by the smart door lock based on the raw image, and affects control accuracy of the smart door lock.

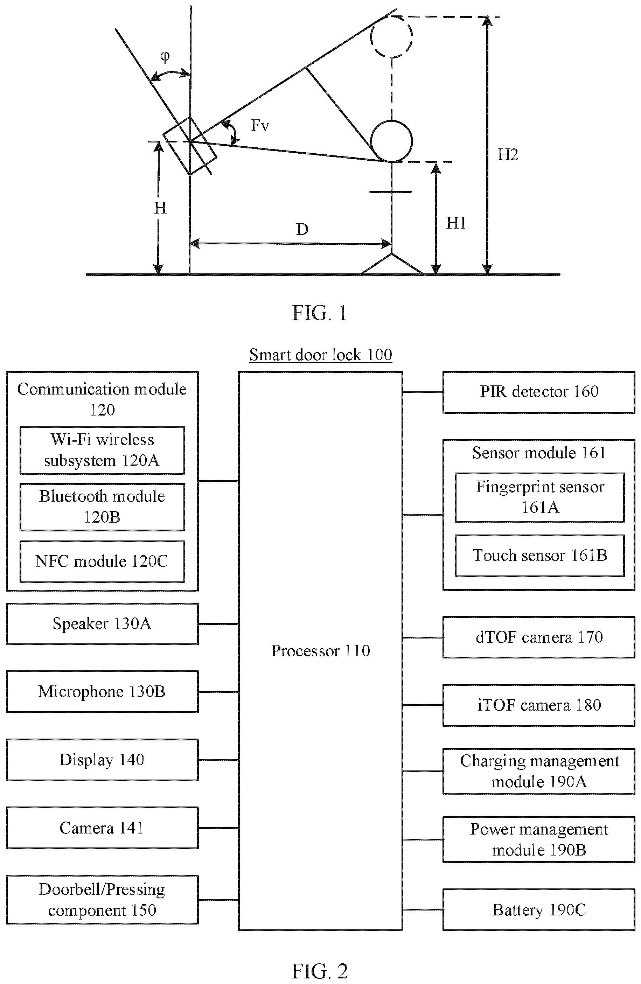

For example, FIG. 1 is a diagram of a relationship between an iTOF camera position in a smart door lock and a human body standing position in an application scenario of the smart door lock. H is an installation height of the iTOF camera on the door, and may also be understood as an installation height of the smart door lock. φ is an elevation angle of the iTOF camera. Fv is a wide viewing angle of the iTOF camera. D is a horizontal distance (may be used as the horizontal distance between a user and the door) between the human body and the iTOF camera. H1 is a minimum height of coverage during shooting of the human body by using the iTOF camera. H2 is a maximum height of the coverage during shooting of the human body by using the iTOF camera. Currently, most iTOF cameras in smart door locks use configuration parameters of an elevation angle of 16°, a wide viewing angle of 64°, and an installation height of 1170 millimeters (mm). With the configuration parameters, when the horizontal distances between the user and the iTOF camera are different, test data of the minimum height and the maximum height of the range covered when the iTOF camera shoots the human body, and test data of a minimum user height and a maximum user height which ensure that the iTOF camera can shoot the face are separately listed in Table 1.

**Table 1 Test data**

| φ/° | Fv/° | D/mm | H/mm | H1/mm | H2/mm | Head-to-body ratio | Minimum user height/mm | Maximum user height/mm |
|---|---|---|---|---|---|---|---|---|
| 16 | 64 | 300 | 1170 | 1084.0 | 1503.2 | 6.5 | 1281 | 1503 |
| 16 | 64 | 400 | 1170 | 1055.3 | 1614.2 | 6.5 | 1247 | 1614 |
| 16 | 64 | 500 | 1170 | 1026.6 | 1725.3 | 6.5 | 1213 | 1725 |
| 16 | 64 | 600 | 1170 | 998.0 | 1836.4 | 6.5 | 1179 | 1836 |
| 16 | 64 | 700 | 1170 | 969.3 | 1947.4 | 6.5 | 1146 | 1947 |
| 16 | 64 | 800 | 1170 | 940.6 | 2058.5 | 6.5 | 1112 | 2058 |
| 16 | 64 | 900 | 1170 | 911.9 | 2169.6 | 6.5 | 1078 | 2170 |

As listed in Table 1 above, in a case in which the configuration parameters of the iTOF camera are fixed, an example in which the user head-to-body ratio is a common value of 6.5 is used. When the horizontal distances D between the human body and the iTOF camera are different, human body height ranges that can be covered by the iTOF camera are different. When the horizontal distance between the human body and the iTOF camera is D, if the user height exceeds the human body height range corresponding to the horizontal distance D (that is, the user height is greater than H2 or the user height is less than H1), the iTOF camera cannot capture the face of the user. In this case, the raw image shot by the iTOF camera may not include the face information of the user. For example, when a user who is excessively tall (for example, the height exceeds 1.85 meters) or excessively short (for example, a height of a child is less than 1.2 meters) stands 50 centimeters in front of the smart door lock, and facial recognition is performed, the user is beyond a height range in which the iTOF camera can shoot the face. As a result, it is difficult for the iTOF to capture the face of the user. Because a recognition algorithm configured in the smart door lock does not include a human body detection algorithm, when the raw image shot by the iTOF camera may not include the face information of the user, the smart door lock cannot determine, based on the data obtained through shooting by the iTOF, whether there is a person in front of the door. Therefore, the smart door lock cannot accurately respond or provide an accurate prompt for the user, resulting in poor user experience.

In an existing method, if the smart door lock cannot recognize a face from the raw image shot by the iTOF camera, the smart door lock continues to repeatedly perform a process of shooting the raw image by using the iTOF camera and performing facial recognition based on the shot raw image, until specified facial recognition duration (for example, 30s) is exceeded, and the smart door lock may finally determine that no face is detected. Therefore, for the foregoing scenario in which the person is excessively close to the door and is beyond a shooting range of the iTOF camera, or a scenario in which the person passes by a door and mistakenly wakes up the smart door lock to perform facial recognition, or a scenario in which the user suddenly leaves in the facial recognition process, the smart door lock needs to work for a longer period of time, and cannot make an accurate response or provide an accurate prompt for the user.

In conclusion, control accuracy of the smart door lock in the foregoing method is low.

To improve control accuracy of the smart door lock, a manner that may be currently used is to perform, by using the human body detection algorithm, human body recognition on the raw image shot by the iTOF camera and infrared (infrared, IR) data detected by the PIR detector, to determine whether there is a person in front of the door and obtain a distance between the person and the door lock. In this way, scenarios in which no face is detected can be accurately classified, and then different voice prompts are provided for users in different scenarios or the facial recognition process is stopped in advance after it is determined that the person leaves. If this manner is used, a human body recognition algorithm needs to be configured in the smart door lock. This increases computing pressure of a processing device in the smart door lock, and affects processing speeds of some devices in the smart door lock. Therefore, control efficiency of the smart door lock is reduced, and training and configuring of the human body recognition algorithm also lead to a stiff increase in costs.

In view of the foregoing problems, embodiments of this application provide a method for controlling opening and closing of a smart door lock, and the smart door lock. Without increasing large additional costs, the solution can resolve a problem of a facial recognition failure, in a face recording/recognition process, caused due to the user height being not within the range in which the iTOF camera can shoot the face, and minimize a problem of an unlocking failure caused thereby. Thus, the solution can improve control accuracy and control efficiency of the smart door lock, and improve user experience. In addition, in a scenario in which a person temporarily passes by the door and mistakenly wakes up the smart door lock, or in a scenario in which a person suddenly leaves in the face recording/recognition process, the solution provided in embodiments of this application may further terminate the facial recognition process in advance, so that facial recognition can be avoided from continuing after the user leaves, thereby reducing power consumption.

The technical solution provided in embodiments of this application may be performed by any smart door lock that includes a camera used for image capturing and a camera used for distance measurement, or may be performed by any electronic device that can control a smart door lock or a camera used for image capturing and a camera used for distance measurement in a smart door lock. The electronic device may be a physical device, or may be a logical apparatus. The logical apparatus may be understood as a logical unit/module that has processing and computing functions. A type, performance, or the like of a hardware device is not limited. For example, the logical apparatus may be one or more logical units/modules in one or more hardware devices.

When the electronic device is the physical device, the electronic device may be the smart door lock, or may be a component, a device, or the like in the smart door lock. The following uses an example in which the smart door lock performs the method for controlling opening and closing of a smart door lock provided in embodiments of this application for description. An implementation process of applying the method for controlling opening and closing of a smart door lock provided in embodiments of this application to another electronic device is similar. Details are not described again.

For example, FIG. 2 is a diagram of a hardware architecture of a smart door lock according to an embodiment of this application. As shown in FIG. 2, the smart door lock 100 may include a processor 110, a communication module 120, a speaker 130A, a microphone 130B, a display 140, a doorbell/pressing component 150, a PIR detector 160, a dTOF camera 170, an iTOF camera 180, a charging management module 190A, a power management module 190B, a battery 190C, and the like. The communication module 120 may include a Wi-Fi wireless subsystem 120A, a Bluetooth module 120B, an NFC module 120C, and the like. Optionally, the smart door lock 100 may further include a camera 141, a sensor module 161, and the like. The sensor module 161 may include a fingerprint sensor 161A, a touch sensor 161B, and the like.

The processor 110 may be connected to components such as the communication module 120, the speaker 130A, the microphone 130B, the display 140, the doorbell/pressing component 150, the PIR detector 160, the dTOF camera 170, and the iTOF camera 180. The processor 110 may be configured to receive signals (or data) sent by these components, and perform corresponding processing.

Optionally, the processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), deep learning processor, and the like Different processing units may be independent components, or may be integrated into one or more processors.

In some embodiments of this application, the processor 110 may include a microcontroller unit (microcontroller unit, MCU) and the deep learning processor. The MCU may be used as a control unit of an entire electronic device. The MCU may control the dTOF camera and the deep learning processor. The deep learning processor may perform facial recognition processing based on a raw image, and the deep learning processor may control the iTOF camera.

The communication module 120 may be a wireless communication module. The communication module 120 may provide a wireless communication solution that is applied to the smart door lock 100 and includes a wireless local area network (wireless local area network, WLAN), Bluetooth (Bluetooth, BT), a near field wireless communication (near field communication, NFC), and the like.

The smart door lock 100 may implement an audio function by using the speaker 130A, the microphone 130B, and the like. In this embodiment of this application, the speaker 130A may be configured to play audio, for example, may be configured to play prompt audio to a user. In this embodiment of this application, the microphone 130B may be configured to capture a sound (for example, a user sound).

The display 140 may be configured to display a digital interface, and the user may enter digits on the digital interface of the display 140 to generate a password. Then, the user can open the door lock by using the digital password. The display 140 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. Optionally, the display 140 may be located on an inner side of a door. The user may know, at home, a situation outside the door through the display.

The doorbell/pressing component 150 may be integrated, as a component, in the electronic device. Alternatively, the smart door lock 100 may not include the doorbell/pressing component 150, but is in a communication connection (for example, wired communication or wireless communication) with the doorbell. Optionally, touching the doorbell may trigger the electronic device to collect visual information.

The PIR detector 160 may detect an infrared signal in an environment in which the PIR detector 160 is located, and may determine, based on the infrared signal, whether there is a person in the environment.

The dTOF camera 170 may be configured to detect whether a moving object is detected in the surrounding environment of the door and a distance between the moving object and the electronic device (the distance may be used as a distance between the moving object and the door).

The iTOF camera 180 can sense depth information of a face, and may be configured to shoot the raw image of the face.

The charging management module 190A is configured to receive a charging input from a charger. The charger may be a wireless charger or a wired charger.

The power management module 190B is configured to connect the battery 190C, the charging management module 190A, and the processor 110. The power management module 190B receives an input from the battery 190C and/or the charging management module 190A, and supplies power to another device or component. The power management module 190B may be further configured to monitor parameters such as a battery capacity, a battery cycle count, and a battery health status (electricity leakage or impedance). In some other embodiments, the power management module 190B may alternatively be disposed in the processor 110. In some other embodiments, the power management module 190B and the charging management module 190A may alternatively be disposed in a same device.

The fingerprint sensor 161A is configured to collect a fingerprint. Optionally, the smart door lock 100 may collect and store fingerprint information of at least one user.

The touch sensor 161B is also referred to as a "touch panel". The touch sensor 161B may be disposed on the display 140, and the touch sensor 161B and the display 140 constitute a touchscreen, which is also referred to as a "touchscreen". The touch sensor 161B is configured to detect a touch operation performed on or near the touch sensor. The touch sensor may transfer the detected touch operation to the processor, to determine a touch event type. A visual output related to the touch operation may be provided through the display 140. In some other embodiments, the touch sensor 161B may alternatively be disposed on a surface of the smart door lock 100 at a position different from that of the display 140.

Optionally, the sensor module 161 may further include a vibration sensor (not shown in FIG. 2). The vibration sensor may detect a vibration signal, and transmit the detected vibration signal to the processor 110. Subsequently, the processor 110 may determine, based on comparison between a received vibration signal and a preset door knocking vibration waveform, whether there is a case in which a visitor knocks the door. The preset door knocking vibration waveform may be locally stored in advance, or may be stored on a server. Optionally, when the comparison is required, the smart door lock 100 may obtain the door knocking vibration waveform from the server through the communication module 120.

The camera 141 may be configured to capture an image or a video. For example, when the visitor triggers the doorbell 150, the doorbell 150 may notify the processor 110 that there is a trigger event, so that the processor 110 captures an image by using the camera and displays the image for the user inside the door.

It should be understood that the smart door lock 100 shown in FIG. 2 is merely an example, and the structure shown in FIG. 2 does not constitute a specific limitation on the smart door lock 100. In some embodiments of this application, the smart door lock 100 may include more or fewer components than those shown in FIG. 2, or some components may be combined, or some components may be split, or different component arrangements may be used. The components shown in FIG. 2 may be implemented in hardware including one or more signal processing circuits and/or application-specific integrated circuits, software, or a combination of software and hardware.

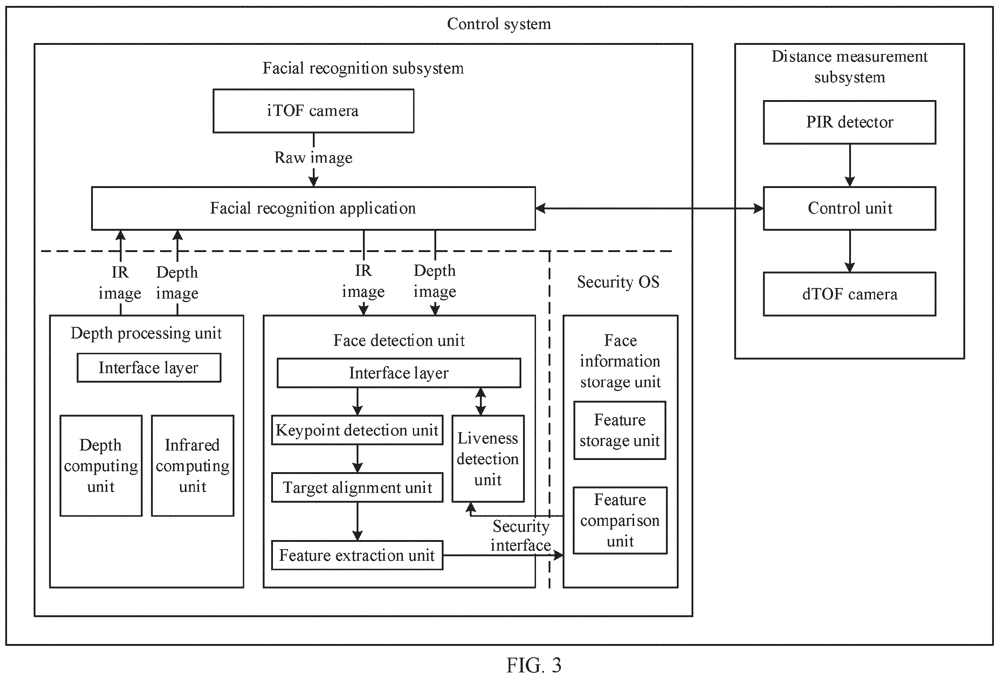

FIG. 3 is a diagram of an architecture of a smart door lock control system according to an embodiment of this application. As shown in FIG. 3, the system may include a distance measurement subsystem and a facial recognition subsystem. The distance measurement subsystem includes a control unit, a PIR detector, and a dTOF camera. The facial recognition subsystem may include an iTOF camera, a facial recognition application, a facial recognition unit, and the like. Descriptions are separately provided below.

In some embodiments of this application, the distance measurement subsystem may be deployed on an MCU in the smart door lock. The facial recognition subsystem may be deployed on an image signal processing (image signal processing, ISP) chip in the smart door lock. The MCU and the ISP chip may be deployed in the smart door lock (for example, the smart door lock shown in FIG. 2) in embodiments of this application.

In some embodiments of this application, some function units or devices in the control system, such as the control unit, the dTOF camera, the facial recognition application, and the iTOF camera, may be in a sleep state or an off state (may also be referred to as a power-off state), to reduce power consumption when these devices do not need to work. The PIR detector may be always in a working state (that is, a running state), so that the PIR detector detects, at any time, an infrared signal in an environment in which the PIR detector is located, to wake up another component (for example, the control unit) in time when the another component needs to be woken up.

The PIR detector may be always in the running state, and may detect, in real time when the dTOF and the iTOF cameras are in the off state, the infrared signal in the surrounding environment in which the PIR detector is located, and wake up the entire distance measurement subsystem when detecting an infrared signal within a preset wavelength range. The preset wavelength range is a wavelength range of an infrared signal from a human body. When the PIR detector detects the infrared signal within the preset wavelength range, it indicates that there is a person in the surrounding environment in which the PIR detector is located. When the PIR detector detects no infrared signal within the preset wavelength range, it indicates that there is no person in the surrounding environment in which the PIR detector is located.

Before the PIR detector detects no infrared signal within the preset wavelength range, the dTOF camera is in the off state (that is, the power-off state). Optionally, before the PIR detector detects no infrared signal within the preset wavelength range, the control unit may be in the sleep state, and may be woken up by the PIR detector when the PIR detector detects the infrared signal within the preset wavelength range. After being woken up, the control unit may wake up (or turn on) the dTOF camera, to complete waking up of the distance measurement subsystem.

After the dTOF camera is turned on, the dTOF camera may be configured to determine whether a moving object is detected in the environment in which the dTOF camera is located, and detect a distance between the moving object and the dTOF camera in real time (the distance is used as a distance between the user and the smart door lock or a door).

As a control unit of the entire control system, the control unit may wake up the facial recognition subsystem when the dTOF camera detects that the distance between the moving object and an electronic device meets a facial recognition trigger condition. The facial recognition trigger condition may be that the detected distance tends to decrease and a last measured distance is less than a specified distance value. Specifically, when waking up the facial recognition subsystem, the control unit may indicate the facial recognition application to wake up (or start) the facial recognition subsystem. Before the facial recognition subsystem is woken up, the iTOF camera in the facial recognition subsystem is in the off state (that is, the power-off state), and the facial recognition application and the facial recognition unit may be in the sleep state. In some embodiments of this application, the control unit may further prohibit waking up the iTOF camera when the dTOF camera detects that the distance between the moving object and the electronic device does not meet the facial recognition trigger condition.

The facial recognition application is used to control the iTOF camera and facial recognition unit. The facial recognition application may wake up or turn on, according to an indication of the control unit, the iTOF camera, and wake up the facial recognition unit, to complete waking up of the facial recognition subsystem.

After the iTOF camera is turned on, the iTOF camera may shoot a raw image in real time, and send the shot raw image to the facial recognition application. The facial recognition application may send the received raw image to the facial recognition unit for facial recognition. After performing facial recognition on the received raw image, the facial recognition unit sends a recognition result (whether the image includes preset face information) to the facial recognition application. The facial recognition application may report the received recognition result to the control unit. The control unit may determine, based on the recognition result, whether to unlock the lock.

In some embodiments of this application, the facial recognition unit may include a depth processing unit, a face detection unit, and a face information storage unit. The depth processing unit may be configured to: extract an IR image (belonging to a two-dimensional image) and a depth (depth) image (belonging to a three-dimensional image) from the raw image; and send the IR image and the depth image to the face detection unit. The face detection unit may be configured to: recognize, based on the IR image and the depth image, a facial feature; and send a recognition result to the face information storage unit. The face information storage unit is configured to: store feature information (for example, a facial feature of a family member) of at least one specified face; and compare whether the facial feature from the face detection unit is consistent with a specified facial feature.

The depth processing unit includes an interface layer, a depth computing unit, and an infrared computing unit. The interface layer is configured to transmit data. The depth computing unit is configured to extract the depth image from the raw image. The infrared computing unit is configured to extract the IR image from the raw image.

The face detection unit includes the interface layer, a keypoint detection unit, a target alignment unit, a feature extraction unit, and a liveness detection unit. The interface layer is configured to transmit data. The keypoint detection unit is configured to detect facial keypoints from the IR image. The facial keypoints may include five keypoints: left and right eyes, a nose, and left and right mouth corners. The target alignment unit is configured to perform keypoint alignment. The feature extraction unit is configured to: extract a keypoint feature obtained after alignment; and send corresponding feature information to the face information storage unit. The liveness detection unit is configured to perform liveness detection based on the depth image.

The face information storage unit includes a feature storage unit and a feature comparison unit. The feature storage unit is configured to store the feature information of the at least one specified face. The feature information indicates the keypoint feature of a corresponding face. The feature comparison unit is configured to compare the keypoint feature extracted by the feature extraction unit with the facial keypoint feature stored in the feature storage unit. When it is determined that a similarity between the keypoint feature extracted by the feature extraction unit and any facial keypoint feature stored in the feature storage unit is greater than or equal to a specified similarity threshold, the comparison is considered to be successful, and it may be determined that the raw image includes the specified face. In this case, the feature comparison module may indicate the liveness detection unit to perform liveness detection. The liveness detection unit may perform liveness detection after receiving the indication. If liveness detection succeeds, it is determined that facial recognition succeeds, and information indicating that facial recognition succeeds may be sent to the facial recognition application through the interface layer. If liveness detection fails, it is determined that facial recognition fails, and information indicating that facial recognition fails may be sent to the facial recognition application through the interface layer.

After receiving the information indicating that facial recognition succeeds or facial recognition fails, the facial recognition application may report the information to the control unit. The control unit may be further configured to: after receiving the information indicating that facial recognition succeeds, open the smart door lock. After receiving the information indicating that facial recognition fails, the control unit does not open the smart door lock.

The face detection unit may further return, when no keypoint is detected from the IR image for a plurality of consecutive times, prompt information indicating that a face is not recognized to the facial recognition application. The facial recognition application reports the prompt information to the control unit. The control unit may be further configured to: after receiving the prompt information, indicate the facial recognition application to turn off the iTOF camera and turn on the dTOF camera to perform distance measurement; and when a distance measured by using the dTOF camera is less than or equal to a specified distance threshold, play, by using a speaker, a prompt tone that prompts a user to slightly move backward, and continue to perform distance measurement by using the dTOF camera. When the measured distance changes to be greater than the specified distance threshold, the control unit turns off the dTOF camera, and indicates the facial recognition application to turn on the iTOF camera, to re-perform the foregoing raw image obtaining and raw image-based facial recognition processes.

It should be understood that the foregoing system architecture of the smart door lock control system and function services in the system are merely examples. In actual application, the control system may be divided into more or fewer function services based on other factors, or functions of each service may be divided in another manner, or the function services may not be divided, but work as a whole.

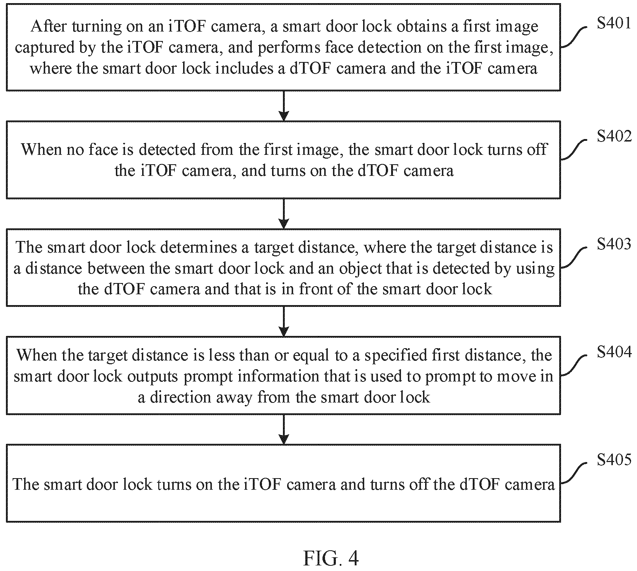

Refer to FIG. 4. The following describes, with reference to the hardware architecture shown in FIG. 2 and the system architecture shown in FIG. 3, a method for controlling opening and closing of a smart door lock provided in embodiments of this application.

As shown in FIG. 4, the method for controlling opening and closing of a smart door lock provided in an embodiment of this application may include the following steps.

S401: After turning on an iTOF camera, a smart door lock obtains a first image captured by the iTOF camera, and performs face detection on the first image.

In some embodiments of this application, the smart door lock may turn on the iTOF camera when determining that there is a person who is close to the smart door lock in a surrounding environment in which the smart door lock is located. Specifically, before step S401, the following steps may be included. The smart door lock detects, by using a PIR detector, whether there is a person in front of the smart door lock in real time. When it is determined that there is a person in front of the smart door lock, a dTOF camera is turned on, and a distance between the smart door lock and the person in front of the smart door lock is detected in real time by using the dTOF camera. If the detected distance is less than or equal to a specified distance value (for example, 1.2 meters), or if the detected distance tends to decrease and a last detected distance is less than or equal to the specified distance value, the smart door lock turns on the iTOF camera, and captures, by using the iTOF camera, an image of the person in front of the smart door lock. In addition, the smart door lock turns off the dTOF camera, to avoid interference caused when the dTOF camera and the iTOF camera work at the same time.

In some embodiments of this application, the dTOF camera and the iTOF camera may be deployed in different chips in the smart door lock. For example, the smart door lock may include an MCU and an ISP chip. The dTOF camera may be deployed on the MCU, and the iTOF camera may be deployed on the ISP chip. The MCU is a low-power-consumption device, and may be used as a control center of the entire smart door lock. The ISP chip is a high-power-consumption device. A facial recognition algorithm configured in the smart door lock usually runs on the ISP chip.

In some embodiments of this application, when performing face detection on an image, the smart door lock may extract an IR image from the image, and then perform facial keypoint detection on the IR image by using a trained deep learning model. When a quantity of facial keypoints detected from the image is greater than or equal to a specified quantity value, it may be determined that a face is detected in the image. Otherwise, it is determined that no face is detected in the image. The facial keypoints may include location points such as an eye, a nose, and a mouth corner.

S402: When no face is detected from the first image, the smart door lock turns off the iTOF camera, and turns on the dTOF camera.

In some embodiments of this application, the first image includes at least one frame of a raw image continuously shot by the iTOF camera. Optionally, a quantity of the at least one frame of images may be a specified value. When detecting no face in the at least one frame of the continuous image, the smart door lock may turn off the iTOF camera, stop capturing an image, and turn on the dTOF camera to start distance measurement.

S403: The smart door lock determines a target distance, where the target distance is a distance between the smart door lock and an object that is detected by using the dTOF camera and that is in front of the smart door lock.

The object is a person or an object in front of the smart door lock.

In an optional implementation, after turning on the dTOF camera in the foregoing step S402, the smart door lock may measure, by using the dTOF camera that is turned on, the distance between the smart door lock and the object in front of the smart door lock, and use the distance as the target distance.

In another optional implementation, after turning on the dTOF camera in the foregoing step S402, the smart door lock may perform, by using the dTOF camera that is turned on, distance measurement for a plurality of consecutive times, to obtain a plurality of distance values, and use an average value of the plurality of distance values as the target distance. The dTOF camera measures a distance between the smart door lock and the object in front of the smart door lock once during each distance measurement. A quantity of times for the plurality of times of distance measurement may be a specified quantity of times. Alternatively, the plurality of times of distance measurement may be a plurality of times of distance measurement performed by the smart door lock within specified duration after the dTOF camera is turned on based on the method in the foregoing step S402.

S404: When the target distance is less than or equal to a specified first distance, the smart door lock outputs prompt information that is used to prompt to move in a direction away from the smart door lock.

In some embodiments of this application, when outputting the prompt information, the smart door lock may directly play audio or a voice corresponding to the prompt information, or may display the prompt information on a display of the smart door lock. For example, the smart door lock may play the prompt information by using a speaker. Content of the prompt information may be "No face is detected. Please move backward one step.", "Please slightly move backward.", or the like.

When the target distance is less than or equal to the first distance, the person in front of the smart door lock/in front of a door may be considered to be excessively close to the smart door lock. Consequently, the face is beyond a wide angle range (that is, a shooting range) of the iTOF camera, and the image captured by the iTOF camera does not include the face. Therefore, first audio is played to prompt the user in front of the smart door lock to move backward, so that the face of the user can be adjusted to the wide angle range of the iTOF camera as much as possible, and the iTOF camera can capture the user face when shooting an image.

In some embodiments of this application, the first distance may be a horizontal distance between the user and the smart door lock in a case in which the iTOF camera shown in FIG. 1 cannot shoot a face of a user that belongs to a common human body height range. The common human body height range may be a range determined based on artificial experience, or may be a range to which most human body heights that are determined through statistics belong. The first distance may be a fixed value determined based on the artificial experience, or may be determined based on parameters of the iTOF camera. When the first distance is determined based on the parameters of the iTOF camera, with reference to the data listed in Table 1, a minimum user height and a maximum user height corresponding to different values of a distance D may be calculated based on parameters, such as an elevation angle φ, a wide angle Fv, an installation height H, and a common human body height range, of the iTOF camera. Then, a user height range that can be covered by the iTOF camera may be obtained when the values of the distance D are different. Further, a distance value corresponding to a height range that cannot cover a common human body height is selected as the first distance. For example, the first distance may be 45 centimeters.

S405: The smart door lock turns on the iTOF camera and turns off the dTOF camera.

In some embodiments of this application, the smart door lock turns on the iTOF camera after outputting the prompt information, and the iTOF camera may re-capture an image. Because the user has been prompted through the output prompt information to adjust a position, after the iTOF camera is turned on for another time in this step, it can be basically ensured that the iTOF camera can capture an image that includes the user face when re-capturing the image, thereby ensuring smooth execution of a subsequent process such as facial recognition.

In some embodiments of this application, in a first optional implementation, after outputting the prompt information, the smart door lock may turn on the iTOF camera and turn off the dTOF camera after waiting for specified duration, so that time for adjusting a relative position between the smart door lock and the user is reserved for the user.

In a second optional implementation, after outputting the prompt information, the smart door lock may continue to detect, by using the dTOF camera, the distance between the smart door lock and the object in front of the smart door lock, until it is determined that the detected distance is greater than the first distance or until the detected distance is greater than the first distance and less than a specified second distance, and then turn on the iTOF camera and turn off the dTOF camera. In this case, after step S404 and before step S405, the smart door lock may further obtain a distance that is measured by the dTOF camera and that is between the smart door lock and the object in front of the smart door lock, and determine that the distance is greater than the first distance. The second distance is greater than the first distance.

In a third optional implementation, after outputting the prompt information, and after first waiting for specified duration, the smart door lock may detect, by using the dTOF camera, the distance between the smart door lock and the object in front of the smart door lock. If the distance is greater than the first distance, or the distance is greater than the first distance and less than a specified second distance, the smart door lock turns on the iTOF camera and turns off the dTOF camera. The second distance is greater than the first distance. After the smart door lock waits for the specified duration, if the distance measured for another time by using the dTOF camera is still less than or equal to the first distance, the smart door lock may output the prompt information for another time for a prompt, and perform the foregoing processes for another time like waiting for the specified duration for another time, measuring the distance for another time, and the like until it is detected, by using the dTOF camera, that the distance between the smart door lock and the object in front of the smart door lock is greater than the first distance, or is greater than the first distance and less than the specified second distance. Based on this manner, the smart device may repeatedly prompt the user for a plurality of times to adjust the distance between the smart door lock and a position of the user, and perform distance measurement to determine whether to turn on the iTOF camera. This ensures that the iTOF camera is turned on after the user is within the shooting range in which the iTOF camera can shoot the face image of the user, thereby reducing resource consumption of the smart door lock as much as possible.

In some embodiments of this application, after turning on the iTOF camera and turning off the dTOF camera, the smart door lock may capture a second image by using the iTOF camera, and perform face detection on the second image. When a face is detected in the second image, the smart door lock may determine whether to unlock the lock based on the detected face. When no face is detected in the second image, the smart door lock may turn on the dTOF camera and turn off the iTOF camera, output the prompt information for another time for a prompt, and perform the foregoing step S405 and the subsequent method for another time. Based on this manner, the smart door lock may repeatedly prompt the user for a plurality of times to adjust the distance between the smart door lock and a position of the user, and capture an image for facial recognition. This ensures that the iTOF camera captures an image that includes a face.

The quantity of times that the smart door lock repeatedly outputs the prompt information for a prompt may be a specified quantity of times, for example, twice.

After the smart door lock repeatedly prompts the user for the plurality of times, if no face is detected in the image captured by the iTOF camera, it may be determined that face detection fails. In this case, the lock is not opened, and the dTOF camera and the iTOF camera may be turned off.

In the foregoing solution, when detecting a face from the image captured by the iTOF camera, the smart door lock may extract a facial feature (for example, a feature like a facial keypoint) corresponding to the detected face. When it is determined that a similarity between the extracted facial feature and a specified facial feature is greater than or equal to a specified similarity threshold, a depth image may be extracted from the image captured by the iTOF camera, and liveness detection is performed based on the depth image. When liveness detection succeeds, the smart door lock may be opened.

In the foregoing method, with reference to working principles (including: the dTOF camera is configured to perform distance measurement, the iTOF camera is configured to perform image capturing, working frequencies of the dTOF camera and the iTOF camera conflict and cannot work at the same time, and the like) of the two devices that are the dTOF camera and the iTOF camera, and without increasing additional algorithm costs, recognition in a scenario (for example, a scenario in which the person is excessively close to the door lock) in which no face is detected in the facial recognition process can be completed in combination with the distance measurement function of the smart door lock. In addition, a corresponding prompt or response is made based on the recognition scenario, so that a facial recognition function of the smart door lock can be more intelligent or power consumption of the smart door lock can be reduced. Thus, control accuracy of the smart door lock can be improved, and user experience can be improved. In addition, this solution has no negative impact (for example, a recognition speed is prolonged) on original facial recognition, and has high practicability.

In some embodiments of this application, in an optional implementation, after the smart door lock determines the target distance in the foregoing step S403, if the smart door lock determines that the target distance is greater than or equal to a specified third distance, the user in front of the smart door lock may be considered to have left, the facial recognition process may be terminated, and the dTOF camera is turned off. The third distance is used as a minimum distance at which the object in front of the smart door lock is considered to have left the smart door lock. The third distance is greater than the first distance. Optionally, the third distance may be greater than or equal to the second distance.

In some embodiments of this application, the third distance may also be equal to the first distance.

In some embodiments of this application, the third distance may be determined based on the value (for example, the specified distance value in the foregoing embodiment) of the distance between the smart door lock and a human body that can wake up the smart door lock. Waking up the smart door lock means that the smart door lock is woken up when both the dTOF camera and the iTOF camera are turned off, so that the smart door lock turns on the dTOF camera. Specifically, a value of the third distance may be set to be greater than or equal to the distance value. For example, when the distance value is 1.2 meters, the third distance may be 1.2 meters or a distance with a larger value (for example, 1.3 meters).

Based on this manner, the smart door lock can detect a scenario in which the user leaves in front of the smart door lock, and terminate the process in advance when detecting that the user leaves. This shortens corresponding time consumed in a process in which when no face is detected, recognition is repeatedly performed until facial recognition times out, thereby reducing power consumption and prolonging standby duration of the smart door lock.

In some embodiments of this application, after the smart door lock determines the target distance in the foregoing step S403, if the smart door lock determines that the target distance is greater than the first distance and less than the third distance, facial recognition may succeed. In other words, the image captured by the iTOF camera includes face information. However, a case in which the face of the user is blocked even though the user is within a range of the distance may also cause a facial recognition failure. If the facial recognition failure occurs within the range of the distance, the iTOF camera may alternatively be turned on again to perform the process of capturing an image to perform facial recognition until facial recognition times out, or the iTOF camera may be turned on again, and the foregoing step S401 and subsequent steps are performed.

Specifically, in the foregoing method, when the target distance is within a range that is greater than the first distance and less than the third distance, the scenario theoretically belongs to a scenario in which a face can be shot by the iTOF camera. However, in step S402, the smart door lock fails to detect a face in the image shot by the iTOF camera. This case may belong to cases such as a complete face not being shot, causing the smart door lock to fail to detect a face in the image shot by the iTOF camera. In this case, the smart door lock may also consider that facial recognition fails, and based on the foregoing method, may further turn on the iTOF camera again to shoot an image and perform facial recognition. In some embodiments of this application, in the foregoing method, before turning on the iTOF camera again, the smart door lock may further output the prompt information that prompts the user to face the smart door lock and not to block the face, wait for the specified duration, and then turn on the iTOF camera again to shoot a face image. Based on this manner, when the user does not face the smart door lock and/or the face of the user is blocked, and the face image is not detected, the user may alternatively be prompted to adjust to be in a status in which the complete face faces the smart door lock, thereby improving a success rate of shooting, by the iTOF camera, a complete face image without blocking, and improving a success rate of subsequent facial recognition.

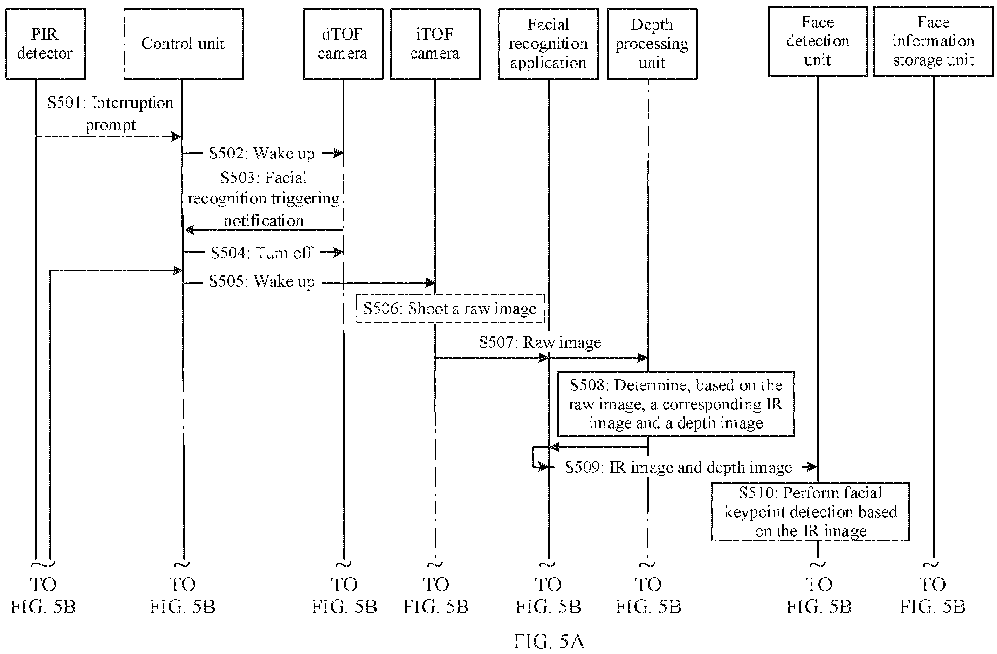

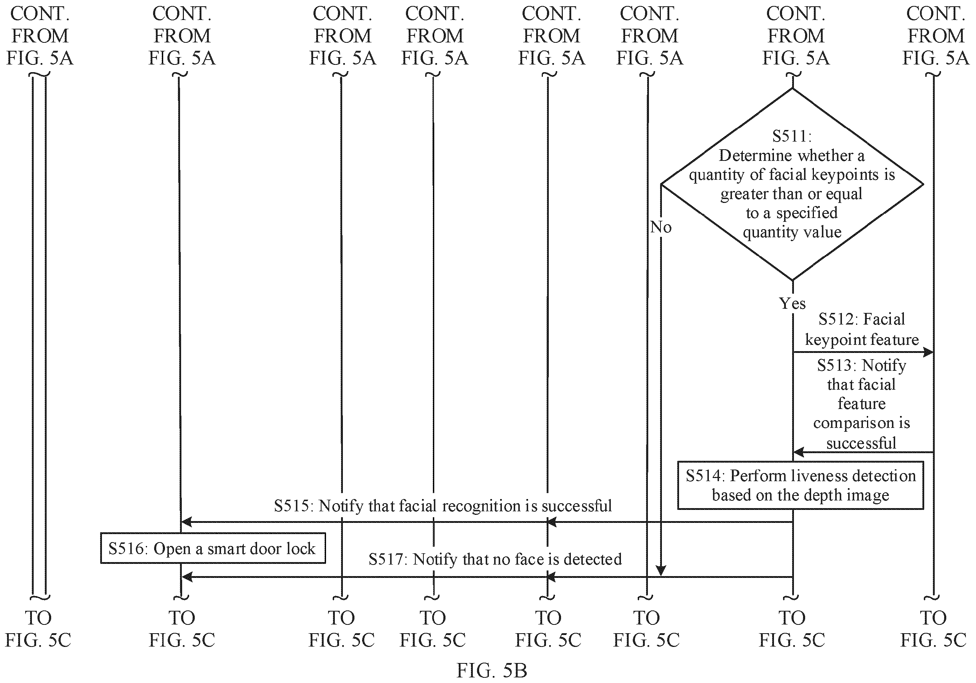

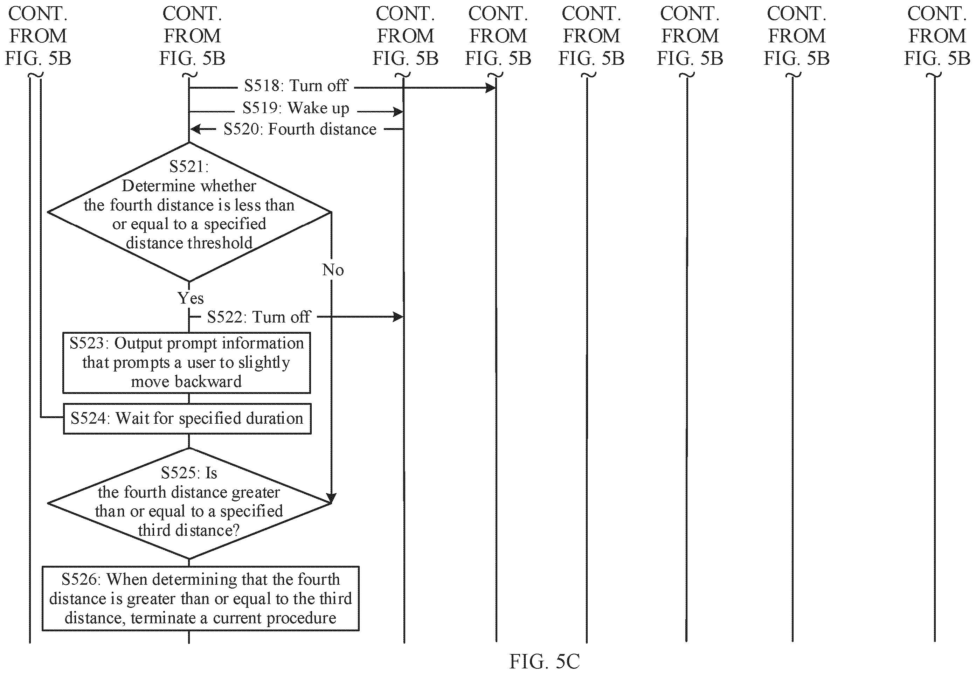

The following uses an example in which the solution provided in this application is applied to the smart door lock control system shown in FIG. 2 to describe in detail the method for controlling opening and closing of a smart door lock provided in this application. As shown in FIG. 5A, FIG. 5B, and FIG. 5C, the method for controlling opening and closing of a smart door lock provided in an embodiment of this application may include the following steps.

S501: When detecting an infrared ray within a specified wavelength range, a PIR detector sends an interruption prompt to a control unit, where the interruption prompt is used to prompt that a person approaches a smart door lock.

S502: The control unit wakes up a dTOF camera.

S503: The dTOF camera is turned on, and a distance between a human body and the dTOF camera is measured in real time. When the measured distance tends to decrease and a last measured distance is less than or equal to a specified distance value, a facial recognition triggering notification is sent to the control unit.

The notification indicates to trigger execution of a facial recognition process.

S504: The control unit turns off the dTOF camera.

S505: The control unit wakes up the iTOF camera.

S506: The iTOF camera shoots a raw image.

S507: The iTOF camera sends the shot raw image to a depth processing unit through the facial recognition application.

This step may specifically include: sending, by the iTOF camera, the shot raw image to the facial recognition application; and sending, by the facial recognition application, the received raw image to the depth processing unit.

S508: The depth processing unit determines, based on the raw image, a corresponding IR image and a depth image.

S509: The depth processing unit sends the IR image and the depth image to a face detection unit through the facial recognition application.

The step may include: sending, by the depth processing unit, the IR image and the depth image to the facial recognition application; and sending, by the facial recognition application, the received IR image and the depth image to the face detection unit.

S510: The face detection unit performs facial keypoint detection based on the IR image.

S511: The face detection unit determines whether a quantity of facial keypoints is greater than or equal to a specified quantity value. If yes, step S512 is performed. Otherwise, step S517 is performed.

When the quantity of the detected facial keypoints is greater than or equal to the specified quantity value, it indicates that a face is successfully detected. When the quantity of the detected facial keypoints is less than the specified quantity value, it indicates that a face is not successfully detected.

S512: The face detection unit sends the detected facial keypoint feature to a face information storage unit.

S513: When determining that a similarity between the facial keypoint feature and a specified facial keypoint feature is greater than or equal to a specified similarity threshold, the face information storage unit notifies the face detection unit that facial feature comparison is successful.

When the similarity between the facial keypoint feature and the specified facial keypoint feature is greater than or equal to the specified similarity threshold, it indicates that the detected face is a preset face.

S514: The face detection unit performs liveness detection based on the depth image.

S515: When determining that liveness detection succeeds, the face detection unit notifies, through the facial recognition application, the control unit that facial recognition succeeds.

This step may include: when determining that liveness detection succeeds, notifying, by the face detection unit, the facial recognition application that facial recognition succeeds; and then notifying, by the facial recognition application, the control unit that facial recognition succeeds.

When liveness detection succeeds, it indicates that the currently detected facial keypoint feature belongs to a user standing in front of a door and the user belongs to a user corresponding to the preset face. In this case, the smart door lock may be opened. When liveness detection fails, it indicates that the currently detected facial keypoint feature does not belong to a user standing in front of a door. Therefore, the smart door lock may not be opened.

S516: The control unit opens the smart door lock.

S517: The face detection unit notifies, through the facial recognition application, the control unit that no face is detected.

The step may include: notifying, by the face detection unit, the facial recognition application that no face is detected; and then notifying, by the facial recognition application, the control unit that no face is detected.

S518: The control unit turns off the iTOF camera.

S519: The control unit wakes up the dTOF camera.

S520: The dTOF camera is turned on, a fourth distance between the human body and the dTOF camera is measured, and a value of the measured distance is sent to the control unit.

Optionally, in this step, the dTOF camera may measure the distance between the human body and the dTOF camera for N consecutive times, use an average value of N distance values obtained through the N times of measurement as a finally measured distance between the human body and the dTOF camera, that is, the fourth distance, and then send the distance value to the control unit. N is a positive integer value. Optionally, N may be a specified positive integer value. For example, a value of N may be 4.

S521: The control unit determines whether the fourth distance is less than or equal to a specified first distance. If yes, step S522 is performed. Otherwise, step S525 is performed.

When the control unit determines that the fourth distance is less than or equal to the specified first distance, a current scenario may be considered to be a scenario in which a person in front of the door is excessively close to the door lock, and the face is beyond a shooting range of the iTOF camera. In this case, the control unit may perform the following step S523 to prompt the user to slightly move backward, so that the user can increase the distance between the user and the smart door lock by adjusting a position, and then the face of the user can enter the shooting range of the iTOF camera, thereby ensuring smooth execution of a subsequent facial recognition process.

S522: The control unit turns off the dTOF camera.

S523: The control unit outputs prompt information that prompts the user to slightly move backward.

S524: The control unit waits for specified duration, and returns to perform step S505.

The specified duration is duration of waiting for the user to move backward. The foregoing step S505 and subsequent steps are re-performed after the specified duration. This can ensure, as much as possible, that the user has adjusted the location of the user when the iTOF camera shoots an image for another time, thereby ensuring, as far as possible, that the raw image including face information is shot, and improving a success rate of subsequent facial recognition.

For example, the specified duration may be 500 milliseconds (ms).

In some embodiments of this application, when the user is excessively close to the smart door lock, the control unit may repeatedly prompt the user to adjust the distance between the user and the smart door lock for a plurality of times. A quantity of times for repeated prompting may be a specified quantity of times. Therefore, after outputting the prompt information that prompts the user to slightly move backwards, the control unit may wait for the specified duration and then return to perform step S505 and subsequent steps. A quantity of times may be a specified quantity of times. That is, in the foregoing step S521, when the control unit determines that the distance value is less than or equal to the specified first distance, before performing step S523, the control unit may further first determine whether the quantity of times for repeatedly outputting the prompt information (for example, prompting the user to slightly move backward) is less than a value of the specified quantity of times. If the quantity of times for outputting the prompt information does not reach the value of the specified quantity of times, step S523 is performed. If the quantity of times for outputting the prompt information reaches the value of the specified quantity of times, the control unit may terminate a current procedure, that is, no longer control opening of the smart door lock.

S525: The control unit determines whether the fourth distance is greater than or equal to a specified third distance.

When determining that the fourth distance is greater than the specified first distance, the control unit continues to determine whether the fourth distance is greater than or equal to the specified third distance threshold. When it is determined that the fourth distance is greater than or equal to the specified third distance, a current scenario may be considered to be a scenario in which the person has left an area near the door lock, and whether to open the lock does not need to be determined. In this case, the control unit may terminate, by performing the following step S526, the currently executed procedure, thereby reducing unnecessary power consumption. When it is determined that the fourth distance is less than the third distance, it indicates that the user is within a distance range in which the face can be theoretically shot by the iTOF camera. However, actually, the smart door lock fails to perform facial recognition based on the image shot by the iTOF camera. In this case, the smart door lock may continue to attempt to shoot an image and perform a processing process such as facial recognition. For example, steps S504 to S517 may be cyclically performed until timeout occurs. Before performing step S504, the smart door lock may further output prompt information such as prompt information that prompts the user to face the smart door lock, not to block the face, and wait for the specified duration. For details about the method, refer to related descriptions in the foregoing embodiment. Details are not described herein again.

S526: When determining that the fourth distance is greater than or equal to the third distance, the control unit terminates the current procedure.

In some embodiments of this application, after terminating the current procedure, the control unit may turn off the dTOF camera. After the dTOF camera is turned off, both the dTOF camera and the iTOF camera are in an off state. An unlocking control process of the smart door lock ends, and a control result is that unlocking fails. After terminating the current procedure and turning off the dTOF camera, the control unit may continue to detect, by using the PIR detector, whether a person approaches the smart door lock. After detecting that a person approaches the smart door lock, the control unit starts the unlocking control process for another time, and performs corresponding unlocking control by performing the method described in the foregoing steps S501 to S526.

It should be noted that the specific implementation procedure provided in the foregoing example is merely an example of a method procedure that is applicable to embodiments of this application. An execution sequence of the steps may be correspondingly adjusted according to an actual requirement, another step may be added, some steps may be reduced, or the like. This is not specifically described in this embodiment of this application.

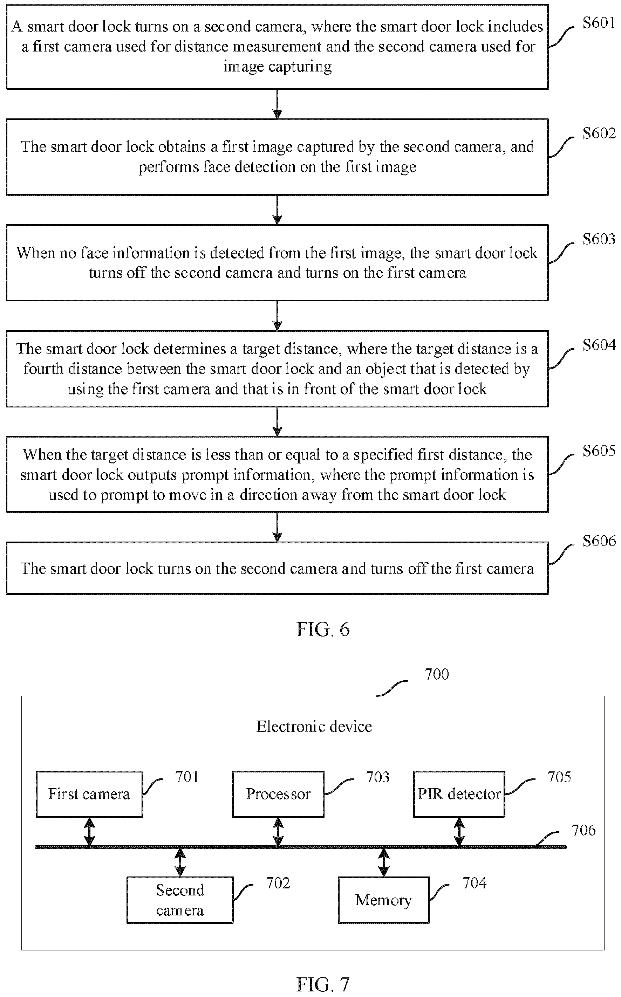

Based on the foregoing embodiments and a same technical concept, an embodiment of this application further provides a method for controlling opening and closing of a smart door lock. As shown in FIG. 6, the method may include the following steps.

S601: A smart door lock turns on a second camera, where the smart door lock includes a first camera used for distance measurement and the second camera used for image capturing.

For example, the smart door lock may be the smart door lock described in the foregoing embodiments. The first camera may be the dTOF camera in the foregoing embodiments. The second camera may be the iTOF camera in the foregoing embodiments.

S602: The smart door lock obtains a first image captured by the second camera, and performs face detection on the first image.

For example, the first image may be the first image described in the foregoing embodiment. The first image may include at least one frame of a raw image continuously shot by the second camera.

S603: When no face information is detected from the first image, the smart door lock turns off the second camera and turns on the first camera.

S604: The smart door lock determines a target distance, where the target distance is a fourth distance between the smart door lock and an object that is detected by using the first camera and that is in front of the smart door lock.

For example, the target distance may be the target distance described in the foregoing embodiment. The fourth distance may be the distance detected by the dTOF camera in step S403 in the foregoing embodiment, or may be the fourth distance described in the foregoing embodiment.

S605: When the target distance is less than or equal to a specified first distance, the smart door lock outputs prompt information, where the prompt information is used to prompt to move in a direction away from the smart door lock.

In some embodiments of this application, after outputting the prompt information, the smart door lock may first wait for specified duration, or first detect, by using the first camera, a fifth distance between the smart door lock and the object in front of the smart door lock until the detected fifth distance is greater than the first distance, or until the detected fifth distance is greater than the first distance and less than a specified second distance, and then perform the following step S606. The second distance is greater than the first distance.

For example, the first distance and the second distance may be the first distance and the second distance described in the foregoing embodiments, respectively. The fifth distance may be the distance detected by the dTOF camera in the second optional implementation of step S405 in the foregoing embodiment.

In some embodiments of this application, after waiting for the specified duration and before turning on the second camera and turning off the first camera, the smart door lock may further detect, by using the first camera, a sixth distance between the smart door lock and the object in front of the smart door lock, and determine that the detected sixth distance is greater than the first distance, or determine that the detected sixth distance is greater than the first distance and less than the specified second distance. The second distance is greater than the first distance.

For example, the sixth distance may be the distance detected by the dTOF camera after the first waiting for specified duration in the third optional implementation of step S405 in the foregoing embodiment.

In some embodiments of this application, after waiting for the specified duration and before turning on the second camera and turning off the first camera, the smart door lock may: further detect, by using the first camera, a seventh distance between the smart door lock and the object in front of the smart door lock; if the detected seventh distance is less than or equal to the first distance, output the prompt information for another time; wait for the specified duration; and detect, by using the first camera, an eighth distance between the smart door lock and the object in front of the smart door lock, and determine that the detected eighth distance is greater than the first distance, or determine that the detected eighth distance is greater than the first distance and less than the specified second distance. The second distance is greater than the first distance.

For example, the seventh distance may be the distance detected by the dTOF camera after the first waiting for specified duration in the third optional implementation of step S405 in the foregoing embodiment. The eighth distance may be the distance detected by the dTOF camera after the waiting for the specified duration for another time in the third optional implementation of step S405 in the foregoing embodiment.

S606: The smart door lock turns on the second camera and turns off the first camera.

In some embodiments of this application, after turning on the second camera and turning off the first camera, the smart door lock may further obtain a second image captured by the second camera, perform face detection on the second image, and perform, based on a face detection result, related control such as unlocking control. For details, refer to descriptions of face detection and subsequent processing methods for the first image in the foregoing embodiment. Details are not described herein again.

For example, the second image may be the second image described in the foregoing embodiment.

In some embodiments of this application, after the target distance is determined in the foregoing step S604, the smart door lock may further turn off the first camera when determining that the target distance is greater than or equal to a specified third distance. The third distance is greater than the first distance and is a minimum distance at which the object leaves the smart door lock.

For example, the third distance may be the third distance described in the foregoing embodiment.

In the foregoing method, for specific steps performed by the smart door lock, refer to related descriptions in the foregoing embodiments. Details are not described herein again.

It should be noted that all or some of the foregoing embodiments provided in this application may be freely and randomly combined. A combined technical solution also falls within the scope of this application.

To implement the functions in the method provided in the foregoing embodiments of this application, the smart door lock/electronic device may include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

For example, FIG. 7 is a diagram of a structure of an electronic device according to an embodiment of this application. As shown in FIG. 7, the electronic device 700 includes a first camera 701 used for distance measurement, a second camera 702 used for image capturing, one or more processors 703, and one or more memories 704. Optionally, the electronic device 700 may further include a PIR detector 705 and the like. The devices may be connected by using one or more communication buses 706.

For example, the electronic device 700 may be the smart door lock in the foregoing embodiments.

For example, the first camera 701 may be a dTOF camera, and the second camera 702 may be an iTOF camera. For specific functions of the dTOF camera, the iTOF camera, and the PIR detector 705, refer to the foregoing descriptions related to FIG. 2. Repeated content is not described in detail again.

The processor 703 may be a general-purpose central processing unit (central processing unit, CPU), a microprocessor, an application-specific integrated circuit (application-specific integrated circuit, ASIC), a general-purpose microcontroller unit, a digital signal microcontroller unit, an application-specific integrated circuit, a field programmable gate array or another programmable logic device, a discrete gate or a transistor logic device, or a discrete hardware component, and may implement or perform the method, steps, and logical block diagrams disclosed in embodiments of this application. The general-purpose microcontroller unit may be any conventional microcontroller unit or the like. The steps of the method disclosed with reference to embodiments of this application may be directly performed by a hardware microcontroller unit, or may be performed by using a combination of hardware in the microcontroller unit and a software module. The software module may be located in the memory 704. The processor 703 reads program instructions from the memory 704, and completes the steps of the method in any one of the foregoing embodiments in combination with the hardware of the processor.

The memory 704 stores one or more computer programs. The one or more computer programs include instructions. The processor 703 invokes the instructions stored in the memory 704, so that the processor 703 may perform, by using the first camera 701, the second camera 702, and the PIR detector 705, the method for controlling opening and closing of a smart door lock in the foregoing embodiments.

In this embodiment of this application, the memory 704 may be a non-volatile memory such as a hard disk drive (hard disk drive, HDD) or a solid-state drive (solid-state drive, SSD), or may be a volatile memory (volatile memory) such as a RAM. The memory may alternatively be any other medium that can be configured to carry or store expected program code in a form of instructions or a data structure and that can be accessed by a computer. This is not limited thereto. Alternatively, the memory in this embodiment of this application may be a circuit or any other apparatus that can implement a storage function, and is configured to store instructions and/or data.

It should be noted that FIG. 7 is merely an implementation of the electronic device 700 provided in this embodiment of this application. In actual application, the electronic device 700 may further include more or fewer components. This is not limited herein.

It may be clearly understood by a person skilled in the art that, for the purpose of convenient and brief description, for a detailed working process of the foregoing described apparatus and unit, refer to a corresponding process in the foregoing method embodiments. Details are not described herein again.

Based on the foregoing embodiments and a same concept, an embodiment of this application further provides an electronic device. The electronic device is configured to control a smart door lock. The smart door lock includes a first camera used for distance measurement and a second camera used for image capturing. The electronic device includes a memory and one or more processors. The memory is configured to store computer program code. The computer program code includes computer instructions. When the computer instructions are executed by the one or more processors, the electronic device controls the smart door lock to perform the method provided in the foregoing embodiments.

Based on the foregoing embodiments and a same technical concept, an embodiment of this application further provides a computer-readable storage medium. The computer-readable storage medium stores a computer program. When the computer program is run on a smart door lock, the smart door lock is enabled to perform the method provided in the foregoing embodiments, or when the computer program is run on an electronic device, the electronic device is enabled to control the smart door lock to perform the method provided in the foregoing embodiments.

Based on the foregoing embodiments and a same technical concept, an embodiment of this application further provides a computer program product. The computer program product includes a computer program or instructions. When the computer program or the instructions are run on a smart door lock, the smart door lock is enabled to perform the method provided in the foregoing embodiments, or when the computer program is run on an electronic device, the electronic device is enabled to control the smart door lock to perform the method provided in the foregoing embodiments.

All or some of the foregoing embodiments may be implemented by using software, hardware, firmware, or any combination thereof. When the software is used for implementation, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A method for controlling opening and closing of a smart door lock, applied to the smart door lock, wherein the smart door lock comprises a first camera used for distance measurement and a second camera used for image capturing, and the method comprises:
turning on the second camera;
obtaining a first image captured by the second camera, and performing face detection on the first image;
when no face information is detected from the first image, turning off the second camera and turning on the first camera;
determining a target distance, wherein the target distance is a fourth distance between the smart door lock and an object that is detected by using the first camera and that is in front of the smart door lock;
when the target distance is less than or equal to a specified first distance, outputting prompt information, wherein the prompt information is used to prompt to move in a direction away from the smart door lock; and
turning on the second camera and turning off the first camera.

2. The method according to claim 1, wherein after the turning on the second camera and turning off the first camera, the method further comprises:
obtaining a second image captured by the second camera;
performing face detection on the second image;
when face information is detected from the second image, determining a facial feature that corresponds to the detected face information;
when it is determined that a similarity between the facial feature and a specified facial feature is greater than or equal to a specified similarity threshold, performing liveness detection based on the second image; and
opening the smart door lock when liveness detection succeeds.

3. The method according to claim 1 or 2, wherein after the outputting prompt information, and before the turning on the second camera and turning off the first camera, the method further comprises:
waiting for specified duration; or
detecting, by using the first camera, a fifth distance between the smart door lock and the object in front of the smart door lock until the detected fifth distance is greater than the first distance, or until the detected fifth distance is greater than the first distance and less than a specified second distance, wherein the second distance is greater than the first distance.

4. The method according to claim 3, wherein after the waiting for specified duration, and before the turning on the second camera and turning off the first camera, the method further comprises:
detecting, by using the first camera, a sixth distance between the smart door lock and the object in front of the smart door lock; and
determining that the detected sixth distance is greater than the first distance, or determining that the detected sixth distance is greater than the first distance and less than the specified second distance, wherein the second distance is greater than the first distance.

5. The method according to claim 3, wherein after the waiting for specified duration, and before the turning on the second camera and turning off the first camera, the method further comprises:
detecting, by using the first camera, a seventh distance between the smart door lock and the object in front of the smart door lock;
if the detected seventh distance is less than or equal to the first distance, outputting the prompt information for another time;
waiting for the specified duration;
detecting, by using the first camera, an eighth distance between the smart door lock and the object in front of the smart door lock; and
determining that the detected eighth distance is greater than the first distance, or determining that the detected eighth distance is greater than the first distance and less than the specified second distance, wherein the second distance is greater than the first distance.

6. The method according to any one of claims 1 to 5, wherein the first image comprises at least one frame of a raw image continuously shot by the second camera.

7. The method according to any one of claims 1 to 6, wherein the target distance is an average value of N reference distances detected by the first camera for N consecutive times, N is a positive integer, and each of the N reference distances is a distance between the smart door lock and the object that is detected by the first camera in one detection process and that is in front of the smart door lock.

8. The method according to any one of claims 1 to 7, wherein after the determining a target distance, the method further comprises:
when the target distance is greater than or equal to a specified third distance, turning off the second camera, wherein the third distance is greater than the first distance.

9. A smart door lock, wherein the smart door lock comprises a first camera, a second camera, a memory, and one or more processors, wherein
the first camera is configured to perform distance measurement, the second camera is configured to perform image capturing, the memory is configured to store computer program code, the computer program code comprises computer instructions, and when the computer instructions are executed by the one or more processors, the smart door lock is enabled to perform the method according to any one of claims 1 to 8.

10. A computer-readable storage medium, wherein the computer-readable storage medium stores a computer program, and when the computer program is run on a smart door lock, the smart door lock is enabled to perform the method according to any one of claims 1 to 8.

11. A computer program product, wherein the computer program product comprises a computer program or instructions, and when the computer program or the instructions are run on a smart door lock, the smart door lock is enabled to perform the method according to any one of claims 1 to 8.
